(19) Europäisches Patentamt

European Patent Office

Office européen des brevets

(11) **EP 1 455 498 A1**

(12) **DEMANDE DE BREVET EUROPEEN**

(43) Date de publication:
**08.09.2004 Bulletin 2004/37**

(51) Int Cl.⁷: **H04L 25/49**, H04B 1/69

(21) Numéro de dépôt: **03290537.4**

(22) Date de dépôt: **06.03.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(71) Demandeur: **STMicroelectronics N.V.**
**1077 XX Amsterdam (NL)**

(72) Inventeurs:
• **Smaini, Lydi**
  **74160 St Julien en Genevois (FR)**
• **Helal, Didier**
  **74160 St Julien en Genevois (FR)**

(74) Mandataire: **Zapalowicz, Francis**
  **Bureau D.A. Casalonga-Josse,**
  **Paul-Heyse-Strasse 33**
  **80336 München (DE)**

(54) **Procédé et dispositif de génération d'impulsions à bande ultra large**

(57) On délivre à une fréquence de délivrance Fe supérieure à une fréquence PRF prédéterminée, des groupes successifs de N bits, l'un au moins de ces groupes comportant au moins un sous-groupe d'au moins un bit définissant au moins une information numérique de position et de forme d'au moins une impulsion de base située à l'intérieur d'une fenêtre de longueur 1/PRF, on convertit (MCV) cette information numérique en ladite impulsion de base, et on filtre (FLT) ladite impulsion de base dans un filtre au moins passe-haut adapté de façon à délivrer une impulsion filtrée du type à bande ultra large positionnée à l'intérieur de ladite fenêtre avec une précision temporelle égale à 1/N.Fe.

FIG. 2

EP 1 455 498 A1

## Description

L'invention concerne la technologie radio du type à bande ultra large (UWB « Ultra Wide Band » en langue anglaise) et plus particulièrement la génération d'impulsions pour l'émission d'un signal incident impulsionnel du type à bande ultra large véhiculant des informations numériques codées.

L'invention s'applique avantageusement mais non limitativement à la transmission de telles informations dans le cadre d'un réseau de transmission sans fil, par exemple un réseau personnel sans fil (WPAN : Wireless Personal Area Network) ou bien un réseau local sans fil (WLAN : Wireless Local Area Network).

La technologie du type à bande ultra large se distingue des technologies à bande étroite et spectre étalé.

A titre indicatif, un exemple de définition d'une technologie du type à bande ultra large est fourni par l'organisme FCC (Federal Communications Commission). Cet organisme précise que la largeur de bande du signal à -10 dB est supérieure à 500 MHz et/ou supérieure à 20 % de la fréquence centrale.

Par ailleurs, au lieu de transmettre une porteuse continue modulée avec de l'information ou avec de l'information combinée avec un code d'étalement, ce qui détermine la largeur de bande du signal, la technologie ultra large bande prévoit la transmission d'une série d'impulsions très étroites. Par exemple, ces impulsions peuvent prendre la forme d'un seul cycle, ou monocycle, ayant une largeur d'impulsion par exemple inférieure à 1 ns. Ces impulsions extrêmement courtes dans le domaine temporel, transformées dans le domaine fréquentiel, conduisent à l'obtention du spectre à bande ultra large caractéristique de la technologie UWB.

Dans la technologie UWB, l'information véhiculée sur le signal peut être codée par exemple par une modulation dite « de position d'impulsion » (PPM ; « Pulse Position Modulation » en langue anglaise). En d'autres termes, le codage d'information s'effectue en altérant l'instant d'émission des impulsions individuelles. Plus précisément, le train d'impulsions est émis à une fréquence de répétition pouvant aller jusqu'à plusieurs dizaines de MHz. Chaque impulsion est transmise dans une fenêtre de longueur prédéterminée, par exemple 50 ns. Par rapport à une position théorique d'émission, l'impulsion est alors en avance ou en retard, ce qui permet de coder un « 0 » ou un « 1 ». Il est également possible de coder plus de deux valeurs en utilisant plus de deux positions décalées par rapport à la position de référence. Il est également possible de superposer à cette modulation en position une modulation BPSK. Il est encore possible d'effectuer une modulation en fréquence.

Compte tenu de la fréquence centrale des impulsions, qui est généralement de l'ordre de quelques GHz, et un décalage en position des impulsions par rapport à la position théorique qui est par exemple de l'ordre de quelques dizaines de picosecondes dans une modulation PPM, il devient alors nécessaire d'utiliser des signaux d'horloge ayant des fréquences très élevées, par exemple de l'ordre de la centaine de GHz. Or, ceci nécessite l'utilisation de moyens contraignants, à la fois du point de vue technologique et du point de vue consommation en courant. Ainsi, il s'avère impossible actuellement de réaliser ces moyens en technologie CMOS.

Par ailleurs, il est important que la précision de l'horloge soit également très bonne, typiquement de quelques picosecondes, ce qui rajoute encore des contraintes technologiques.

En outre, la réalisation de générateurs classiques d'impulsions commandés par des signaux ayant des fréquences très élevées s'avère particulièrement délicate, notamment au niveau du contrôle de la position réelle des impulsions, de leur fréquence centrale, et de leur durée.

L'invention vise à apporter une solution à ces problèmes.

L'invention a pour but d'intégrer la génération des impulsions dans la commande elle-même de façon à pouvoir contrôler à la fois la position et la forme de chaque impulsion.

L'invention a également pour but de proposer un tel dispositif de génération capable d'être réalisé en technologie CMOS de façon particulièrement simple, et capable d'offrir une précision compatible avec par exemple, une modulation en position.

L'invention propose donc un procédé de génération d'impulsions pour l'émission d'un signal impulsionnel du type à bande ultra large.

Selon une caractéristique générale de l'invention, on délivre à une fréquence de délivrance Fe, supérieure à une fréquence PRF prédéterminée, des groupes successifs de N bits, l'un au moins de ces groupes comportant au moins un sous-groupe d'au moins 1 bit définissant au moins une information numérique de position et de forme d'au moins une impulsion de base située à l'intérieur d'une fenêtre de longueur 1/PRF.

On convertit cette information numérique en ladite impulsion de base et, on filtre ladite impulsion de base dans un filtre au moins passe-haut adapté de façon à délivrer une impulsion filtrée du type à bande ultra large, positionnée à l'intérieur de ladite fenêtre avec une précision temporelle égale à 1/N.Fe.

Ainsi, selon l'invention, la combinaison d'un filtre au moins passe-haut adapté à la technologie du type à bande ultra large, et d'une information numérique de position et de forme, permet quel que soit le nombre de bits des sous-groupes, de générer une impulsion UWB contrôlée dans sa position et dans sa forme.

Par ailleurs, l'invention utilise en quelque sorte également une sorte de conversion parallèle/série partant de groupes de N bits en parallèle pour aboutir à des impulsions temporellement étalées. Et, le fait d'utiliser cette conversion parallèle/série permet de travailler avec un signal d'horloge à la fréquence Fe, typiquement quelques centaines de MHz, par exemple 625 MHz, et d'obtenir une précision temporelle meilleure que ou égale à 100 picosecondes, par exemple de l'ordre de 50 picosecondes, ce qui correspond à un signal effectif d'horloge de 20 GHz.

En pratique, N pourra être une puissance entière de 2.

Par ailleurs, bien que cela ne soit pas indispensable, la fréquence de délivrance Fe est avantageusement égale à un multiple de la fréquence PRF.

Selon un mode de mise en oeuvre de l'invention, la fréquence de coupure du filtre peut être choisie de façon à obtenir une impulsion filtrée présentant un spectre d'énergie dans le domaine fréquentiel, dont la largeur de bande à -10 dB est supérieure à 500 MHz.

La fréquence de coupure du filtre peut être également choisie de façon à obtenir une impulsion présentant un spectre d'énergie dans le domaine fréquentiel dont la largeur de bande à -10 dB est supérieure à 20 % de la fréquence centrale.

A titre indicatif, la fréquence de coupure du filtre peut être de l'ordre de 3 GHz.

Bien qu'il soit envisageable de générer des impulsions de base pouvant comporter un, deux ou trois fronts (transitions), associées à un ou plusieurs filtres passe-haut, il est particulièrement avantageux que l'impulsion de base comporte au moins quatre transitions.

En effet, le spectre d'énergie fréquentielle d'une telle impulsion est composé du spectre d'une fenêtre temporelle (spectre de forme sinus cardinal sin[x] /x dû à la durée limitée de l'impulsion) centré autour de la fréquence nulle mais également dupliqué autour d'une fréquence fondamentale FD et d'harmoniques. Et, généralement, la fréquence fondamentale FD est compatible avec une spécification ultra large bande. Aussi, dans ce cas, pour obtenir une impulsion du type ultra large bande, il suffit d'effectuer un filtrage passe-bande pour ne conserver que la partie du spectre fréquentiel d'énergie centrée autour de la fréquence fondamentale FD, de ladite impulsion de base.

Par ailleurs, il est encore préférable que l'impulsion de base comporte une succession d'impulsions élémentaires identiques. Ainsi, on peut définir précisément la fréquence centrale de l'impulsion ainsi que sa largeur de bande. Plus précisément, la largeur de bande de l'impulsion est alors donnée par l'inverse de la durée de l'impulsion de base tandis que la fréquence centrale est fournie par l'inverse de la durée de chaque impulsion élémentaire.

Selon un mode de mise en oeuvre de l'invention, pour obtenir par exemple une impulsion UWB dans la bande 3,1-10,6 GHz, il suffit alors d'utiliser un filtre passe-bande dont la fréquence de coupure basse est de l'ordre de 3 GHz et dont la fréquence de coupure haute est de l'ordre de 10,6 GHz.

Selon un mode de mise en oeuvre de l'invention, on convertit ladite information numérique de position et de forme en ladite impulsion de base à l'aide d'une logique combinatoire qui peut par exemple comporter une arborescence de portes logiques OU EXCLUSIF.

En variante, on peut également associer des éléments de retard prédéterminés, fixes ou variables ou programmables, à ladite logique combinatoire.

Selon un mode de mise en oeuvre de l'invention, la conversion d'une information numérique de position et de forme comporte :

- l'élaboration à partir d'un signal d'horloge de base ayant la fréquence Fe, de N signaux d'horloge élémentaires ayant tous la même fréquence Fe mais mutuellement temporellement décalés de 1/N.Fe,
- la commande par les N signaux d'horloge élémentaires de N bascules recevant successivement les groupes de N bits, et
- une combinaison logique des N sorties des N bascules à l'aide de ladite logique combinatoire.

Il est par ailleurs avantageux de traiter les différents signaux en mode différentiel, en aval des bascules. Ceci permet de modifier aisément la polarité des impulsions générées.

Lorsque le sous-groupe de bits comporte plusieurs bits, le premier bit du sous-groupe définit par exemple la position de l'impulsion de base à l'intérieur de ladite fenêtre, tandis que l'ensemble des bits du sous-groupe définissent la forme de l'impulsion de base.

Selon un mode de mise en oeuvre de l'invention, au moins deux groupes peuvent comporter au moins un sous-groupe de bits définissant respectivement au moins deux informations numériques de position et de forme d'au moins deux impulsions situées à l'extérieur de ladite fenêtre.

Il est également possible qu'au moins un groupe comporte plusieurs sous-groupes de bits définissant respectivement plusieurs informations numériques de position et de forme de plusieurs impulsions situées à l'intérieur de ladite fenêtre.

De telles variantes permettent ainsi de réduire l'écart temporel entre les différentes impulsions émises, et par conséquent d'augmenter la fréquence de répétition des impulsions.

L'invention propose également un dispositif de génération d'impulsions pour l'émission d'un signal impulsionnel du type à bande ultra large.

Selon une caractéristique générale de l'invention, le dispositif comprend

- des moyens de traitement aptes à délivrer à une fréquence de délivrance Fe supérieure à une fréquence PRF prédéterminée, des groupes successifs de N bits, l'un au moins de ces groupes comportant au moins un sous-groupe d'au moins un bit définissant au moins une information numérique de position et de forme d'au moins une impulsion de base située à l'intérieur d'une fenêtre de longueur 1/PRF,

- des moyens de conversion aptes à convertir cette information numérique en ladite impulsion de base, et
- des moyens de filtrage au moins passe-haut connectés à la sortie des moyens de conversion et adaptés de façon à délivrer une impulsion filtrée du type à bande ultra large, positionnée à l'intérieur de ladite fenêtre avec une précision temporelle égale à $1/N.Fe$.

Selon un mode de réalisation de l'invention dans lequel l'impulsion de base comporte au moins quatre transitions, formant par exemple une succession d'impulsions élémentaires identiques, les moyens de filtrage comportent un filtre passe-bande adapté pour ne laisser passer que la partie centrée autour de la fréquence fondamentale FD, du spectre fréquentiel d'énergie de ladite impulsion de base.

Selon un mode de réalisation de l'invention, les moyens de conversion comportent une unité de logique combinatoire, par exemple formée d'une arborescence de portes logiques OU EXCLUSIF, éventuellement associée à des retards prédéterminés.

Selon un mode de réalisation de l'invention, les moyens de conversion comportent

- un circuit d'horloge programmable recevant un signal d'horloge de base ayant la fréquence Fe et délivrant N signaux d'horloge élémentaires ayant tous la même fréquence Fe mais mutuellement temporellement décalés de $1/N.Fe$,
- N bascules connectées en entrée à la sortie des moyens de traitement, respectivement commandées par les N signaux d'horloge élémentaires, et délivrant respectivement N signaux de sortie. Ladite logique combinatoire est alors apte à recevoir les N signaux de sortie.

Selon un mode de réalisation de l'invention, les moyens de conversion présentent une structure différentielle en aval des bascules et les moyens de filtrage présentent également une structure différentielle.

Les moyens de conversion peuvent être avantageusement réalisés en technologie CMOS.

L'invention a également pour objet un terminal d'un système de transmission sans fil incorporant un dispositif tel que défini ci-avant.

D'autres avantages et caractéristiques de l'invention apparaîtront à l'examen de la description détaillée de modes de réalisation et de mise en oeuvre, nullement limitatifs, et des dessins annexés sur lesquels :

- la figure 1 illustre schématiquement un mode de réalisation d'un dispositif selon l'invention,
- la figure 2 illustre plus en détail mais toujours schématiquement un mode de réalisation de moyen de conversion d'un dispositif selon l'invention,
- la figure 3 illustre plus en détail mais toujours schématiquement une partie des moyens de conversion de la figure 2,
- la figure 4 représente un chronogramme temporel schématique de différents signaux d'horloge utilisés dans un mode de réalisation de moyens de conversion,
- la figure 5 illustre plus en détail mais toujours schématiquement un mode de réalisation d'une unité de logique combinatoire selon l'invention,
- la figure 6 représente des chronogrammes temporels schématiques de différents signaux conduisant à l'obtention d'une impulsion de base selon l'invention,
- la figure 7 illustre schématiquement un exemple de localisation d'une impulsion de base au sein d'une fenêtre de longueur 1/PRF selon l'invention,
- la figure 8 illustre schématiquement un exemple de spectre fréquentiel d'énergie d'une impulsion de base telle que celle illustrée sur la figure 7,
- la figure 9 illustre un autre exemple d'une impulsion de base à quatre fronts ou transitions,
- la figure 10 illustre le spectre fréquentiel d'énergie de l'impulsion de la figure 9,
- la figure 11 illustre une impulsion UWB résultant d'un filtrage passe-bande de l'impulsion de base illustrée sur la figure 9,
- la figure 12 illustre le spectre fréquentiel d'énergie de l'impulsion de la figure 11,
- les figures 13 et 14 représentent schématiquement d'autres localisations possibles d'impulsions de base à l'intérieur d'une fenêtre de longueur 1/PRF,
- les figures 15 à 17 illustrent schématiquement d'autres exemples de combinaisons logiques de bits conduisant à l'obtention de différentes impulsions de base,
- la figure 18 illustre schématiquement un autre mode de réalisation d'une logique combinatoire selon l'invention,
- la figure 19 illustre schématiquement un exemple d'une impulsion de base obtenue à la sortie d'une logique combinatoire telle que celle illustrée sur la figure 18, et
- la figure 20 illustre schématiquement et partiellement un mode de réalisation d'un dispositif selon l'invention à structure différentielle.

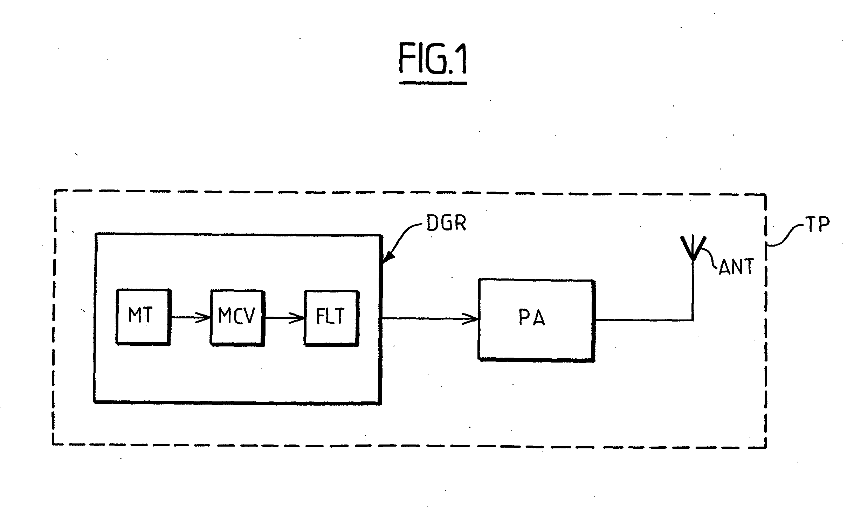

Sur la figure 1, la référence DGR désigne un dispositif de génération d'impulsion selon l'invention, qui est avantageusement incorporé dans un terminal TP d'un réseau de communication local sans fil. Ce dispositif de génération permet de générer des impulsions du type à bande ultra large.

D'une façon générale, le dispositif de génération DGR comporte des moyens de traitement MT aptes à délivrer à une fréquence de délivrance Fe supérieure à une fréquence PRF prédéterminée, des groupes successifs de N bits, l'un au moins de ces groupes comportant au moins un sous-groupe d'au moins un bit définissant au moins une information numérique de position et de forme d'au moins une impulsion de base située à l'intérieur d'une fenêtre de longueur 1/PRF.

Le dispositif GR comporte par ailleurs des moyens de conversion MCV aptes à convertir cette information numérique de position et de forme en ladite impulsion de base.

Le dispositif DGR comporte également des moyens de filtrage FLT au moins passe-haut, connectés à la sortie des moyens de conversion et adaptés de façon à délivrer une impulsion filtrée du type à bande ultra large positionnée à l'intérieur de ladite fenêtre avec une précision temporelle égale à 1/N.Fe.

L'impulsion filtrée est ensuite amplifiée dans un amplificateur de puissance PA de structure classique et connue, puis transmise à une antenne ANT pour être émise en direction de récepteurs de signaux UWB, de structure classique et connue.

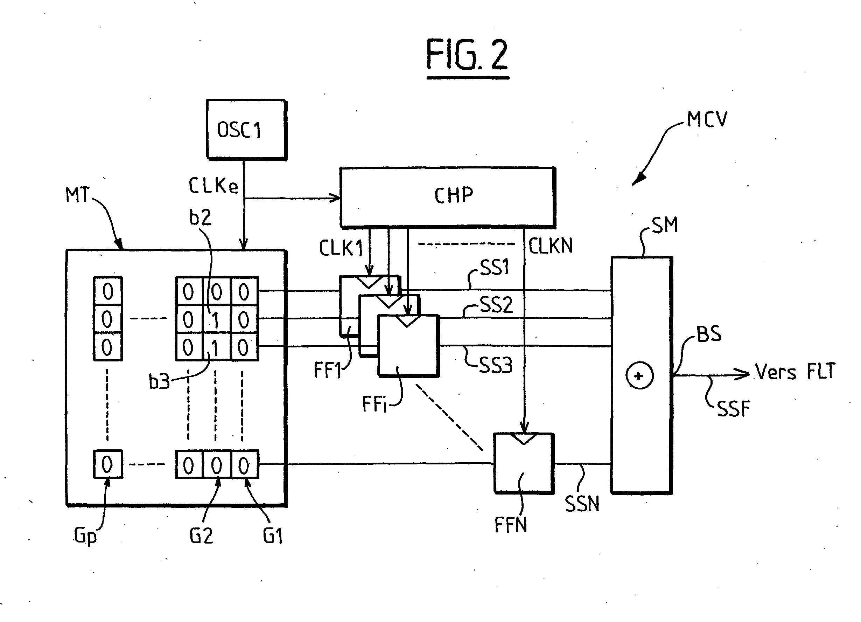

Si l'on se réfère maintenant à la figure 2, on voit que sur cet exemple de réalisation, les moyens de traitement MT délivrent à la fréquence Fe, égale ici à un multiple de la fréquence PRF, des groupes successifs G1-Gp de N bits.

Le signal d'horloge CLKe a une fréquence égale à la fréquence de délivrance Fe et une période Te.

Dans le cas présent, la longueur 1/PRF de chaque fenêtre est égale à p fois la période Te du signal d'horloge CLKe fourni par exemple par un oscillateur à quartz OSC1.

Par ailleurs, dans l'exemple illustré ici, on voit que le deuxième groupe G2 de N bits comporte un sous-groupe de bits ayant la valeur 1. Ce sous-groupe est formé ici du bit b2, du bit b3 ainsi que des bits b4 et b5 non représentés sur la figure 2 à des fins de simplification.

On verra plus en détail ci-après que ces quatre bits définissent une information de position et de forme d'une impulsion de base qui va être générée à la sortie BS d'une unité de logique combinatoire SM.

Matériellement, les moyens de traitement MT peuvent comporter une mémoire comportant l'ensemble des bits, ainsi qu'un processeur associé à un registre de sortie, pour délivrer successivement au rythme du signal d'horloge CLKe les groupes successifs Gi de N bits.

Les moyens de conversion MCV sont ici du type « parallèle/série ». Ils comportent un circuit d'horloge programmable CHP recevant le signal d'horloge de base CLKe et délivrant N signaux d'horloge élémentaires CLK1-CLKN, ayant tous la même fréquence Fe, mais mutuellement temporellement décalés de 1/N.Fe.

A titre indicatif, ces signaux d'horloge pourront être mutuellement temporellement décalés, de l'ordre de 50 picosecondes, par exemple.

Les moyens de conversion comportent également N bascules D, respectivement référencées FF1-FFN. Ces bascules sont respectivement commandées par les N signaux d'horloge élémentaires CLK1-CLKN et elles reçoivent en entrée les N bits de chacun des groupes successifs Gi.

Au rythme des fronts montants successifs des différents signaux d'horloge élémentaires CLK1-CLKN, les N bits de chaque groupe vont être successivement délivrés en sortie des bascules FFi sous la forme de signaux SSi de 0 ou 5 Volts par exemple (ces valeurs dépendant de la technologie utilisée) en fonction de la valeur des bits, et combinés dans l'unité SM. Au bout de p fronts montants du signal d'horloge de base CLKe, les p groupes auront été traités.

Ainsi, lorsque les p groupes auront été traités, le signal de sortie SSF comportera une ou plusieurs impulsions de base en fonction de la valeur des différents bits des différents groupes de bits.

Dans le cas présent, une seule impulsion de base sera délivrée par fenêtre de longueur 1/PRF comme on va le voir plus en détail ci-après.

La position de l'impulsion de base, en l'occurrence son instant initial, est définie par la valeur logique 1 du premier bit b2 du sous-groupe de bits ayant la valeur logique 1.

Par ailleurs, l'ensemble des bits du sous-groupe de bits définissent ici la forme, en l'espèce le nombre de transitions ou de fronts de l'impulsion de base.

L'homme du métier aura par conséquent remarqué que les moyens de l'invention permettent de positionner l'instant initial de l'impulsion avec une précision temporelle égale à 1/N.Fe.

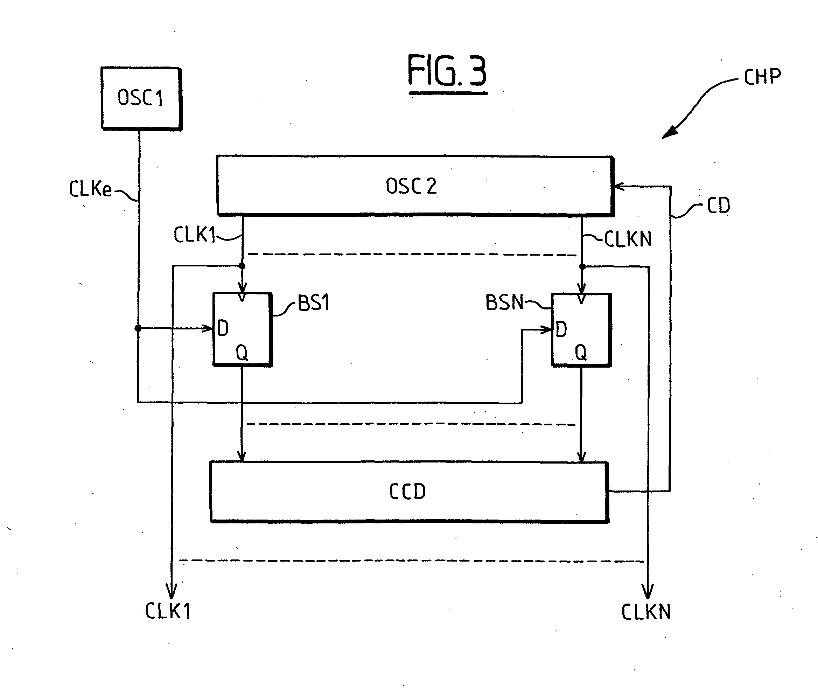

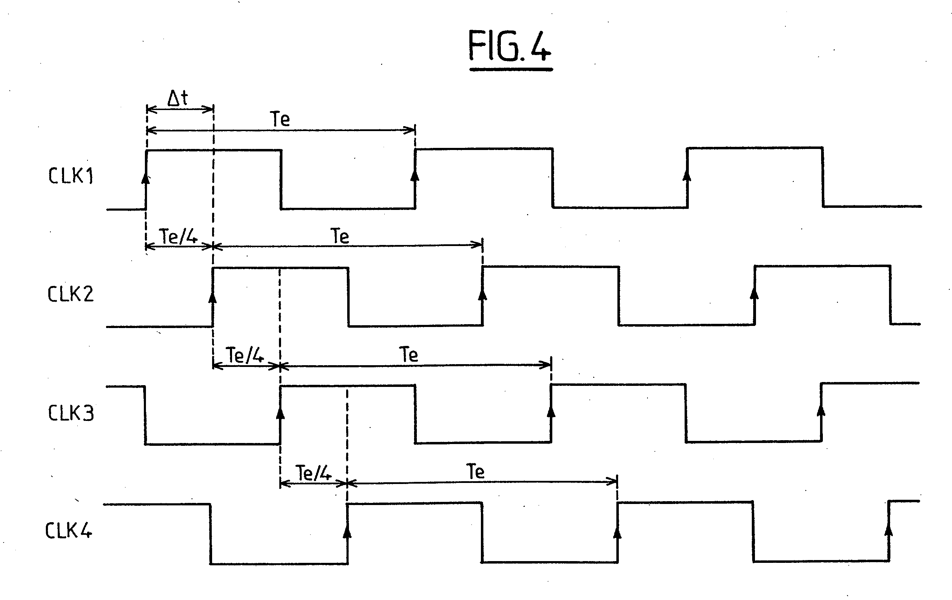

A titre d'exemple, on peut se référer à la figure 4, sur laquelle on a représenté à des fins de simplification uniquement quatre signaux d'horloge élémentaires CLK1-CLK4 (correspondant à N=4). En fait, comme on le voit sur la figure 3, le signal d'horloge de base CLKe est l'un des signaux d'horloge élémentaires, par exemple le signal CLK1.

En pratique, le circuit d'horloge programmable CHP peut être composé d'une horloge, par exemple un quartz, et d'un certain nombre d'éléments de retard montés en série à la sortie de l'horloge. A cet égard, l'homme du métier pourra éventuellement se référer à la demande de brevet européen n° 0 843 418.

Une difficulté apparaît lorsqu'il convient de délivrer les signaux d'horloge élémentaires avec une précision (« jitter » en langue anglaise) très faible, par exemple de l'ordre de quelques picosecondes. C'est la raison pour laquelle il est alors avantageux que le circuit d'horloge programmable CHP comprenne une boucle numérique à verrouillage de phase comportant (figure 3) par exemple un oscillateur programmable en anneau OSC2, délivrant les N signaux d'horloge élémentaires CLK1-CLKN. Cet oscillateur en anneau est commandé à partir d'un circuit de commande CCD, recevant les sorties respectives de N bascules BS1-BSN. Ces N bascules sont respectivement commandées par les N signaux d'horloge élémentaires CLK1-CLKN et reçoivent sur leur entrée D le signal d'horloge de base CLKe issu par exemple d'un oscillateur classique à quartz OSC1.

L'homme du métier pourra, à cet égard, se référer, si nécessaire, au brevet américain n° 6 208 182, en ce qui concerne notamment la commande de l'oscillateur en anneau. On en rappelle ici cependant les principes généraux. Le circuit de commande CCD comporte des moyens pour comparer des échantillons deux à deux, de façon à déterminer si une transition d'état s'est produite dans un intervalle temporel séparant les deux échantillons, cette comparaison étant effectuée sur au moins deux cycles, consécutifs ou non, de l'oscillateur en anneau. Cette comparaison est effectuée de sorte que :

- si, durant le second cycle, une transition d'état comparable est détectée dans le même intervalle, la commande de l'oscillateur en anneau n'est pas modifiée,
- si, durant le second cycle, une transition d'état comparable est détectée dans un intervalle ultérieur, la période de l'oscillateur en anneau est diminuée, et
- si, durant le second cycle, une transition d'état comparable est détectée dans un intervalle antérieur, la période de l'oscillateur en anneau est augmentée.

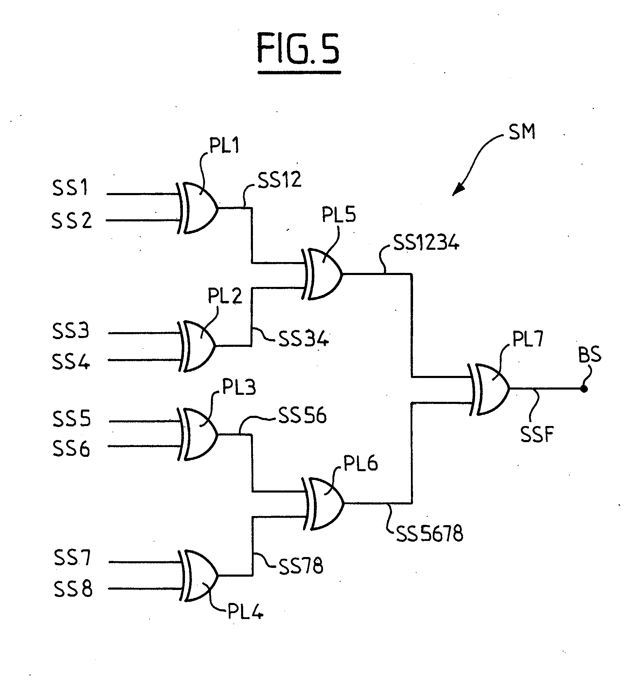

En ce qui concerne l'unité logique combinatoire SM, elle peut être réalisée à partir d'une arborescence de portes logiques OU EXCLUSIF référencées PLi, comme illustré sur la figure 5.

Dans l'exemple de la figure 5, on a supposé que le nombre N de bits de chaque groupe était égal à 8. On suppose également que seuls les bits b2, b3, b4 et b5 du groupe G2 ont la valeur logique 1, les autres bits de ce groupe G2 ainsi que les bits de tous les autres groupes ayant la valeur logique 0.

Sur la figure 5, une première porte logique PL1 reçoit en entrée les deux signaux SS1 et SS2 délivrés par les bascules FF1 et FF2 et délivre en sortie un signal SS12.

De même, une porte logique PL2 reçoit les deux signaux SS3 et SS4 et délivre en sortie le signal SS34.

La porte logique PL3 reçoit en entrée les deux signaux SS5 et SS6 et délivre en sortie le signal SS56.

La porte logique PL4 reçoit en entrée les deux signaux SS7 et SS8 et délivre en sortie le signal SS78.

Les signaux SS12 et SS34 sont délivrés aux deux entrées d'une porte logique PL5 qui délivre en sortie le signal SS1234. De même, la porte logique PL6 reçoit les signaux SS56 et SS78 et délivre le signal SS5678.

Les deux signaux SS1234 et SS5678 sont combinés dans la porte logique OU EXCLUSIF PL7 qui délivre le signal de sortie SSF.

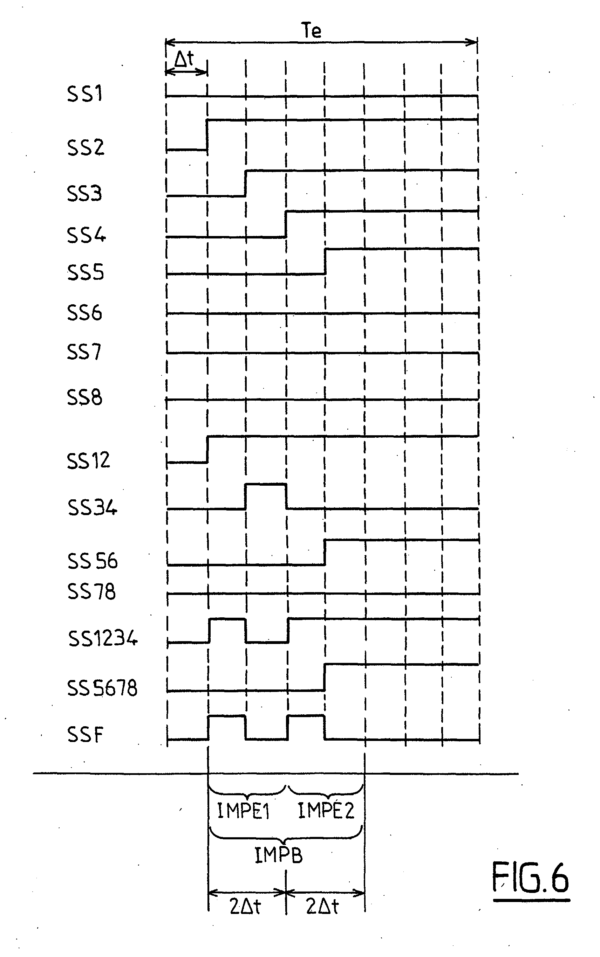

Si l'on se réfère maintenant au chronogramme de la figure 6, on voit que la période Te (ici la deuxième période de la fenêtre de longueur 1/PRF) est virtuellement subdivisée en huit sous-périodes puisque le nombre de bits N est égal à huit.

Chaque sous-période a une longueur temporelle égale à Δt, Δt étant égal à 1/8 Fe.

Le bit b1 du groupe G2 (figure 2) étant égal à 0, le signal SS1 prend la valeur 0 sur toute la longueur de la deuxième période Te.

Par contre, puisque le bit b2 prend la valeur 1, le signal SS2 prend la valeur logique 1 lors du front montant du signal d'horloge élémentaire CLK2 et le garde jusqu'au prochain front montant de ce signal d'horloge élémentaire CLK2, c'est-à-dire pendant une période Te.

Il en est de même pour les signaux SS3, SS4 et SS5 qui prennent la valeur logique 1 lors, des fronts montants respectifs des signaux d'horloge élémentaires CLK3, CLK4 et CLK5.

Par contre, les signaux SS6, SS7 et SS8 gardent la valeur logique 0 puisque les bits correspondants b6, b7 et b8 ont là valeur nulle.

Par conséquent, le signal SS12 prend la valeur logique 1 après un retard Δt après le début de la deuxième période Te et le garde au cours de cette période Te.

Le signal SS34 prend la valeur logique 1 uniquement au cours de la troisième subdivision de la période Te.

Le signal SS56 prend la valeur logique 1 à partir de la cinquième subdivision de la période Te, tandis que le signal SS78 reste à la valeur logique 0.

Il s'ensuit donc l'évolution temporelle des signaux SS1234 et SS5678, illustrée sur la figure 6.

En conséquence, le signal de sortie SSF prend la valeur 1 au cours de la deuxième subdivision de la deuxième période Te, puis la valeur 0, puis à nouveau la valeur 1 au cours de la quatrième subdivision de cette deuxième période Te.

Le signal SSF est à 0 partout ailleurs.

Une impulsion de base IMPB a donc été générée en sortie de l'unité de logique combinatoire SM à partir des bits délivrés par les moyens de traitement. Cette impulsion de base IMPB comporte ici quatre fronts ou transitions et elle est formée de deux impulsions élémentaires identiques IMPE1, IMPE2, ayant chacune une durée égale à 2Δt.

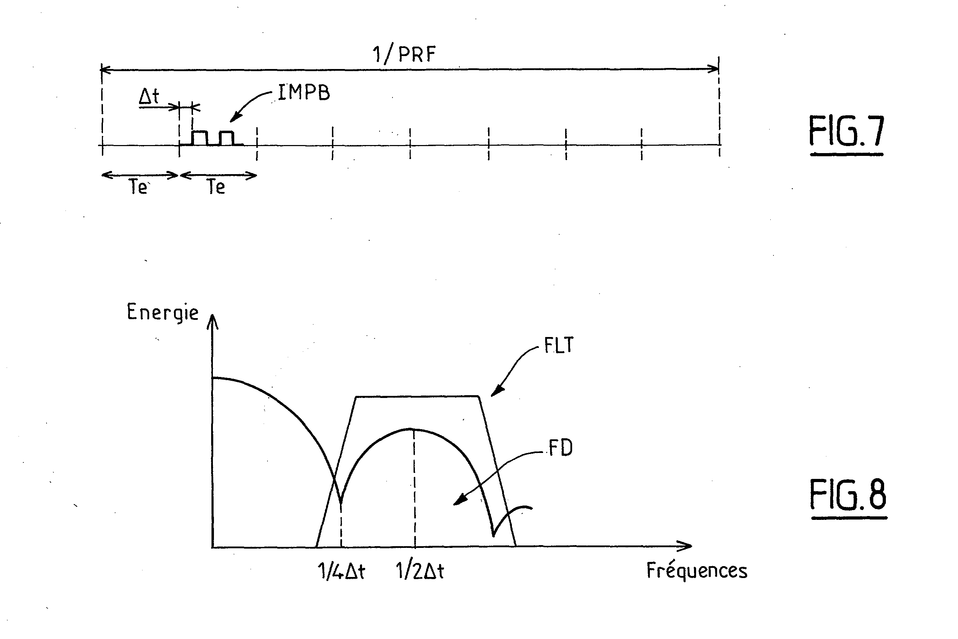

Comme illustré sur la figure 6 mais aussi sur la figure 7, cette impulsion de base IMPB est positionnée au cours de la deuxième période Te de la fenêtre de longueur 1/PRF et elle débute avec un retard Δt après le début de cette deuxième période Te.

Une telle impulsion de base IMPB comportant quatre fronts ou transitions présente un spectre fréquentiel d'énergie tel que celui illustré sur la figure 8.

Ce spectre est la reproduction du spectre d'une fenêtre temporelle, introduit par la durée limitée de l'impulsion de base IMPB et centré à la fréquence nulle, autour d'une fréquence fondamentale FD et d'harmoniques multiples de cette dernière.

Par ailleurs, puisque l'impulsion de base IMPB est formée de deux impulsions élémentaires identiques, c'est-à-dire qu'elle est en quelque sorte périodique, la fréquence fondamentale FD est définie par la longueur de chaque impulsion élémentaire. Plus précisément, cette fréquence fondamentale FD est égale à 1/2Δt. Par ailleurs, la largeur de bande à -4 dB est égale à l'inverse de la longueur de l'impulsion de base IMPB, c'est-à-dire égale à 1/4Δt.

Par conséquent, si l'on dispose en aval des moyens de conversion, d'un filtre FLT passe-bande adapté pour ne laisser passer que la partie du spectre centrée autour de la fréquence fondamentale FD, on obtiendra après filtrage une impulsion UWB. Bien entendu la valeur Δt aura été convenablement choisie de façon à ce que l'impulsion satisfasse aux caractéristiques de la technologie UWB.

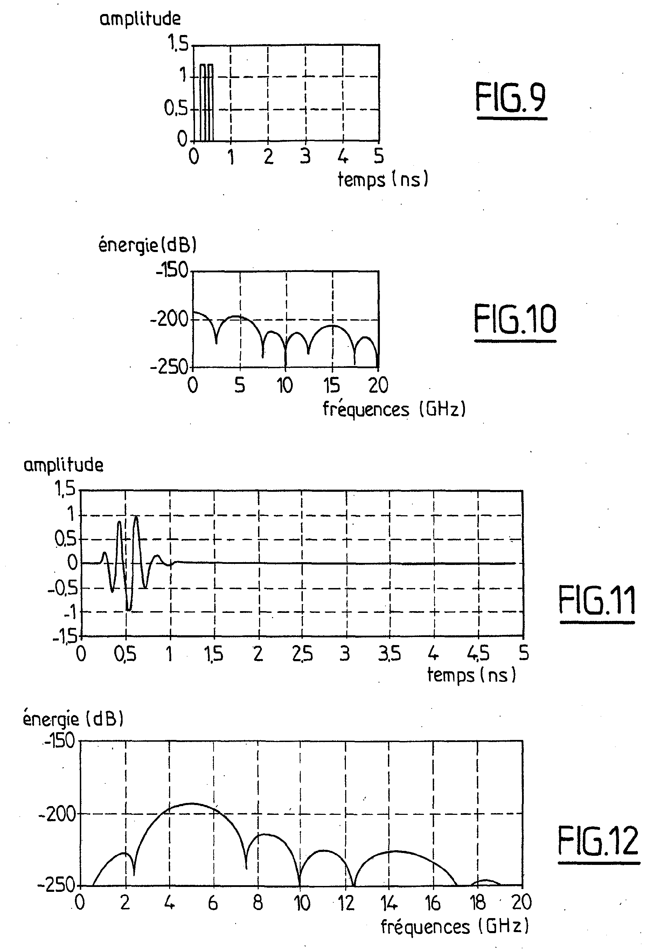

A titre indicatif, on a représenté sur la figure 9, un exemple concret d'une telle impulsion à quatre fronts espacée de 100 picosecondes. Le spectre fréquentiel d'énergie d'une telle impulsion de base est illustré sur la figure 10 et comporte une fréquence fondamentale FD de 5 GHz.

Après filtrage dans un filtre passe-bande ayant une fréquence de coupure basse de l'ordre de 3 GHz et une fréquence de coupure haute de l'ordre de 10 GHz, on obtient l'impulsion UWB illustrée sur la figure 11 et présentant un spectre fréquentiel d'énergie illustré sur la figure 12.

Il convient de noter ici que puisque le filtre FLT utilisé est un filtre au moins passe-haut, et avantageusement passe-bande dans certains cas, il élimine la composante continue de l'impulsion IMPB, ce qui conduit à l'obtention d'une impulsion présentant des amplitudes positives et négatives, comme illustré sur la figure 11.

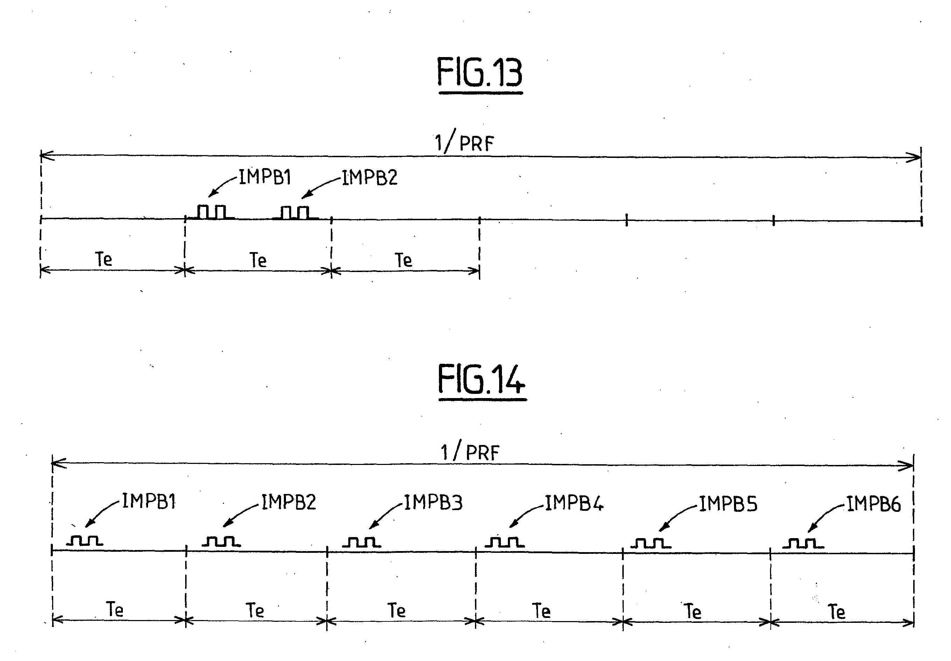

Il est également possible comme illustré sur la figure 13, de générer plusieurs impulsions de base en utilisant à l'intérieur d'un même groupe de N bits, plusieurs sous-groupes de bits ayant par exemple la valeur 1. Ainsi, sur la figure 13, on a représenté deux impulsions de base IMPB1 et IMPB2 obtenues par exemple à partir de 4 bits consécutifs du groupe G2 ayant la valeur 1, et de quatre autres bits consécutifs de ce groupe G2 ayant la valeur 1, ces deux sous-groupes de bits étant séparés par des bits de valeur 0.

De même, il serait possible, comme illustré sur la figure 14, de générer une impulsion de base IMPBi dans chaque période Te de la fenêtre de longueur 1/PRF. Ceci serait obtenu en prévoyant un sous-groupe de bits ayant la valeur logique 1 (par exemple, dans le cas présent, quatre bits ayant la valeur logique 1) dans chacun des p groupes Gp successifs de N bits.

Bien entendu, une combinaison de la figure 13 et de la figure 14 serait également possible pour former dans chaque période Te plusieurs impulsions de base.

L'invention permet ainsi d'obtenir des périodes de répétition des impulsions extrêmement faibles, tout en produisant des impulsions de forme quelconque, avec une précision de positionnement égale à 1/NFe.

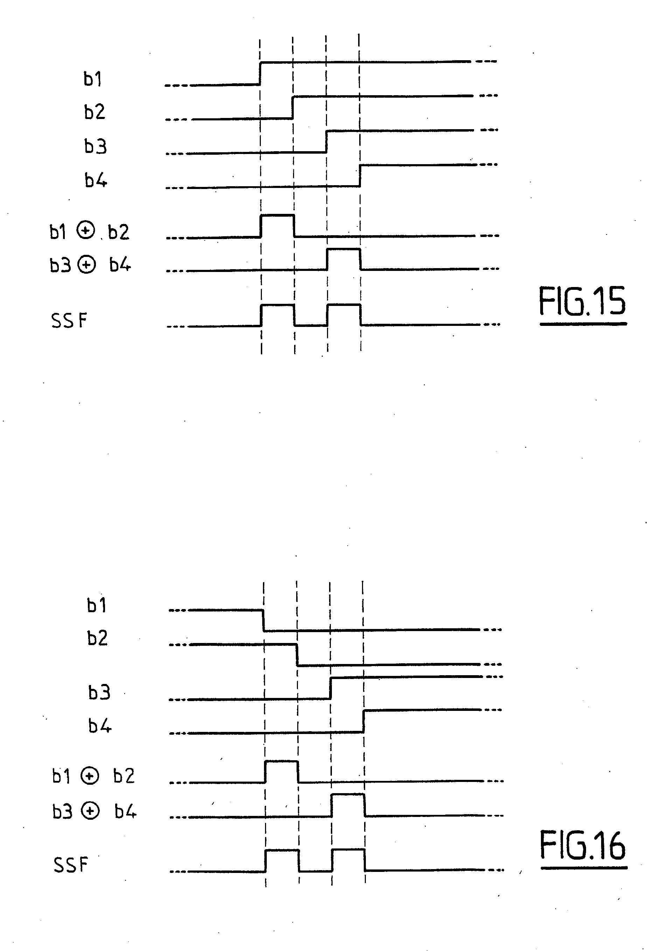

La figure 15 reprend schématiquement l'obtention de l'impulsion de base dans le signal SSF obtenue à partir de la combinaison des quatre bits b1-b4.

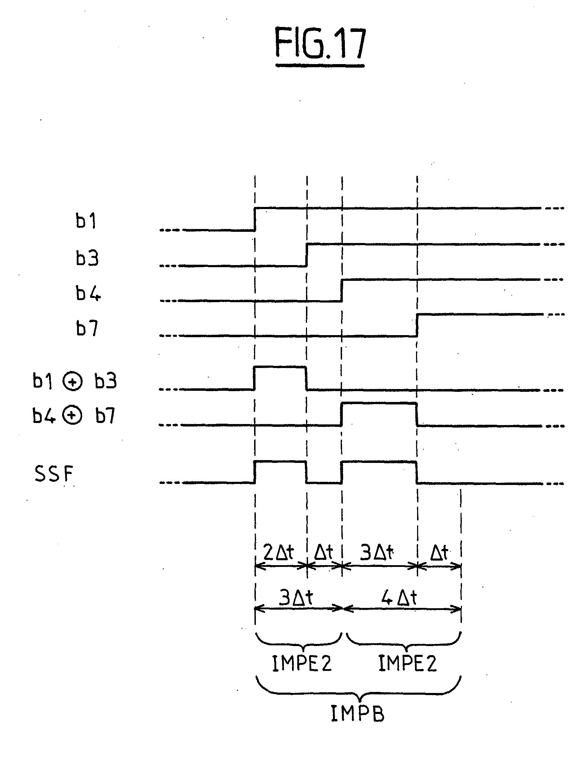

La figure 16 montre que l'on peut obtenir la même impulsion de base à partir également des bits b1-b4 mais lorsque les bits b1 et b2 passent de la valeur 1 à la valeur 0.

Il est également possible d'obtenir, comme illustré sur la figure 17 une impulsion de base IMPB à quatre fronts, et formée de deux impulsions élémentaires IMPE1 et IMPE2 de durées différentes.

Une telle impulsion est par exemple obtenue en mettant les bits b1, b3, b4 et b7 à 1.

Dans ce cas, l'impulsion IMPE1 a une longueur égale à 3Δt tandis que l'impulsion élémentaire IMPE2 a une longueur égale à 4Δt, ce qui conduit à une impulsion de base IMPB de longueur 7Δt.

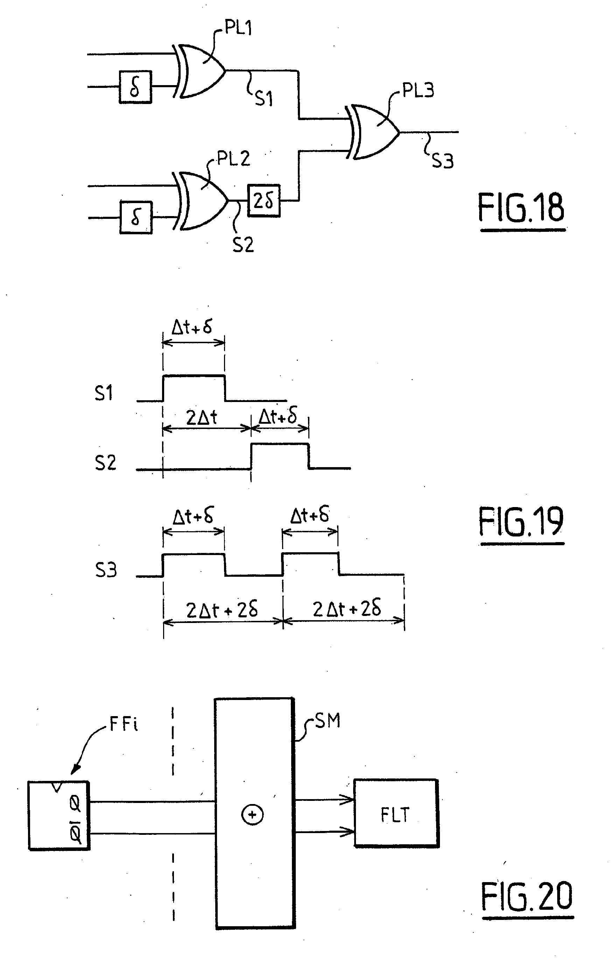

Il est également possible, comme illustré sur la figure 18, d'associer des retards temporels, fixes ou programmables, sur l'une au moins des entrées des portes logiques OU EXCLUSIF de l'unité logique combinatoire SM.

A titre indicatif, sur la figure 18, on n'a représenté que trois portes logiques OU EXCLUSIF. Un retard δ est associé à l'une des entrées de chacune des portes PL1 et PL2 tandis qu'un retard de valeur 2δ est associé à l'une des entrées de la porte logique PL3.

Ceci conduit à l'obtention des signaux S1, S2 et S3 illustrés schématiquement sur la figure 19, on voit alors que l'on obtient une impulsion de base sur le signal S3 ayant une longueur égale à 4Δt + 4δ, et formée de deux impulsions élémentaires ayant chacune une longueur égale à 2Δt + 2δ.

Par ailleurs, de façon à pouvoir changer très simplement la polarité de chaque impulsion générée, il est particulièrement avantageux de prévoir une structure différentielle en aval des bascules FFi. Ceci est illustré très schématiquement sur la figure 20.

Ainsi, on utilisera avantageusement les sorties Q et $\overline{Q}$ de chacune des bascules FFi et l'on utilisera des portes logiques différentielles ainsi qu'un filtre à structure différentielle.

L'invention n'est pas limitée aux modes de réalisation et de mise en oeuvre qui viennent d'être décrits mais en embrassent toutes les variantes.

Ainsi, alors que l'on a décrit la génération d'impulsion présentant au moins quatre transitions, ce qui conduit à des spectres présentant des harmoniques dont les bandes sont inversement proportionnelles à la durée du signal, il serait également envisageable d'obtenir des impulsions UWB à partir d'impulsions de base à un, deux ou trois fronts. Ceci étant, dans ce cas, le filtre devrait être au moins passe-haut de façon à éliminer les fréquences basses et ne laisser passer que les fréquences UWB. Par ailleurs, dans certains cas, une batterie de filtre ou des filtres ajustables seraient nécessaires pour générer des impulsions avec des fréquences centrales et des bandes différentes.

**Revendications**

1. Procédé de génération d'impulsions pour l'émission d'un signal impulsionnel du type à bande ultra large, **caractérisé par le fait qu'**on délivre à une fréquence de délivrance Fe supérieure à une fréquence PRF prédéterminée, des groupes successifs (Gp) de N bits, l'un au moins de ces groupes comportant au moins un sous-groupe d'au moins un bit définissant au moins une information numérique de position et de forme d'au moins une impulsion de base (IMPB) située à l'intérieur d'une fenêtre de longueur 1/PRF, on convertit cette information numérique en ladite impulsion de base, et on filtre (FLT) ladite impulsion de base dans un filtre au moins passe-haut adapté de façon à délivrer une impulsion filtrée du type à bande ultra large positionnée à l'intérieur de ladite fenêtre avec une précision temporelle égale à 1/N.Fe.

2. Procédé selon la revendication 1, **caractérisé par le fait que** la fréquence de coupure du filtre (FLT) est choisie de façon à obtenir une impulsion filtrée présentant un spectre d'énergie dans le domaine fréquentiel dont la largeur de bande à -10dB est supérieure à 500 MHz.

3. Procédé selon la revendication 1 ou 2, **caractérisé par le fait que** la fréquence de coupure du filtre (FLT) est choisie de façon à obtenir une impulsion présentant un spectre d'énergie dans le domaine fréquentiel dont la largeur de bande à -10dB est supérieure à 20% de la fréquence centrale.

4. Procédé selon l'une des revendications précédentes, **caractérisé par le fait que** la fréquence de coupure du filtre (FLT) est de l'ordre de 3 GHz.

5. Procédé selon l'une des revendications précédentes, **caractérisé par le fait que** l'impulsion de base (IMPB) comporte au moins quatre transitions.

6. Procédé selon la revendication 5, **caractérisé par le fait que** l'impulsion de base comporte une succession d'impulsions élémentaires identiques (IMPE1, IMPE2).

7. Procédé selon la revendication 5 ou 6, **caractérisé par le fait que** le filtre (FLT) est un filtre passe-bande adapté pour ne laisser passer que la partie centrée autour de la fréquence fondamentale (FD), du spectre fréquentiel d'énergie de ladite impulsion de base.

8. Procédé selon la revendication 7, **caractérisé par**

**le fait que** la fréquence de coupure basse du filtre passe bande (FLT) est de l'ordre de 3 GHz et la fréquence de coupure haute est de l'ordre de 10,6 GHz.

9. Procédé selon l'une des revendications précédentes, **caractérisé par le fait qu'**on convertit ladite information numérique de position et de forme en ladite impulsion de base à l'aide d'une logique combinatoire (SM).

10. Procédé selon la revendication 9, **caractérisé par le fait que** ladite logique combinatoire (SM) comporte une arborescence de portes logiques OU EXCLUSIF (PLi).

11. Procédé selon la revendication 9 ou 10, **caractérisé par le fait qu'**on associe des éléments de retards (δ) à ladite logique combinatoire (SM).

12. Procédé selon l'une des revendications 9 à 11, **caractérisé par le fait que** la conversion d'une information numérique de position et de forme comporte l'élaboration à partir d'un signal d'horloge de base ayant la fréquence Fe, de N signaux d'horloge élémentaires (CLKi) ayant tous la même fréquence Fe mais mutuellement temporellement décalés de 1/N. Fe, la commande par les N signaux d'horloge élémentaires de N bascules recevant successivement les groupes de N bits, et une combinaison logique des N sorties des N bascules à l'aide de ladite logique combinatoire.

13. Procédé selon la revendication 12, **caractérisé par le fait qu'**en aval des bascules, on traite les différents signaux en mode différentiel.

14. Procédé selon l'une des revendications précédentes, **caractérisé par le fait que** le sous-groupe de bits comporte plusieurs bits, le premier bit du sous-groupe définissant la position de l'impulsion de base à l'intérieur de ladite fenêtre, et l'ensemble des bits du sous-groupe définissant la forme de l'impulsion de base.

15. Procédé selon l'une des revendications précédentes, **caractérisé par le fait qu'**au moins deux groupes comportent au moins un sous-groupe de bits définissant respectivement au moins deux informations numériques de position et de forme d'au moins deux impulsions situées à l'intérieur de ladite fenêtre.

16. Procédé selon l'une des revendications précédentes, **caractérisé par le fait qu'**au moins un groupe comporte plusieurs sous-groupes de bits définissant respectivement plusieurs informations numériques de position et de forme de plusieurs impulsions situées à l'intérieur de ladite fenêtre.

**17.** Procédé selon l'une des revendications précédentes, **caractérisé par le fait que** ladite précision temporelle de positionnement est égale à ou meilleure que 100 picosecondes.

**18.** Procédé selon la revendication 17, **caractérisé par le fait que** N est une puissance de deux, et **par le fait que** la fréquence de délivrance est de l'ordre de quelques centaines de MHz et la précision temporelle égale à ou meilleure que 50 picosecondes environ.

**19.** Dispositif de génération d'impulsions pour l'émission d'un signal impulsionnel du type à bande ultra large, **caractérisé par le fait qu'**il comprend :

- des moyens de traitement (MT) aptes à délivrer à une fréquence de délivrance Fe supérieure à une fréquence PRF prédéterminée, des groupes successifs de N bits, l'un au moins de ces groupes comportant au moins un sous-groupe d'au moins un bit définissant au moins une information numérique de position et de forme d'au moins une impulsion de base située à l'intérieur d'une fenêtre de longueur 1/PRF,
- des moyens de conversion (MCV) aptes à convertir cette information numérique en ladite impulsion de base, et
- des moyens de filtrage (FLT) au moins passe-haut connectés à la sortie des moyens de conversion et adaptés de façon à délivrer une impulsion filtrée du type à bande ultra large positionnée à l'intérieur de ladite fenêtre avec une précision temporelle égale à 1/N.Fe.

**20.** Dispositif selon la revendication 19, **caractérisé par le fait que** la fréquence de coupure du filtre (FLT) est choisie de façon à obtenir une impulsion filtrée présentant un spectre d'énergie dans le domaine fréquentiel dont la largeur de bande à -10dB est supérieure à 500 MHz.

**21.** Dispositif selon la revendication 19 ou 20, **caractérisé par le fait que** la fréquence de coupure du filtre (FLT) est choisie de façon à obtenir une impulsion présentant un spectre d'énergie dans le domaine fréquentiel dont la largeur de bande à -10dB est supérieure à 20% de la fréquence centrale.

**22.** Dispositif selon l'une des revendications 19 à 21, **caractérisé par le fait que** la fréquence de coupure du filtre (FLT) est de l'ordre de 3 GHz.

**23.** Dispositif selon l'une des revendications 19 à 22, **caractérisé par le fait que** l'impulsion de base comporte au moins quatre transitions.

**24.** Dispositif selon la revendication 23, **caractérisé par le fait que** l'impulsion de base comporte une succession d'impulsions élémentaires identiques.

**25.** Dispositif selon la revendication 23 ou 24, **caractérisé par le fait que** les moyens de filtrage (FLT) comportent un filtre passe-bande adapté pour ne laisser passer que la partie centrée autour de la fréquence fondamentale (FD), du spectre fréquentiel d'énergie de ladite impulsion de base.

**26.** Dispositif selon la revendication 25, **caractérisé par le fait que** la fréquence de coupure basse du filtre passe bande est de l'ordre de 3 GHz et la fréquence de coupure haute est de l'ordre de 10,6 GHz.

**27.** Dispositif selon l'une des revendications 19 à 26, **caractérisé par le fait que** les moyens de conversion comportent une unité de logique combinatoire (SM).

**28.** Dispositif selon la revendication 27, **caractérisé par le fait que** ladite unité de logique combinatoire (SM) comporte une arborescence de portes logiques OU EXCLUSIF.

**29.** Dispositif selon la revendication 27 ou 28, **caractérisé par le fait que** les moyens de conversion (MCV) comportent des éléments de retards (δ) associés à ladite logique combinatoire.

**30.** Dispositif selon l'une des revendications 27 à 29, **caractérisé par le fait que** les moyens de conversion (MCV) comportent un circuit d'horloge programmable (CHP) recevant un signal d'horloge de base ayant la fréquence Fe et délivrant N signaux d'horloge élémentaires ayant tous la même fréquence Fe mais mutuellement temporellement décalés de 1/N.Fe, N bascules connectées en entrée à la sortie des moyens de traitement, respectivement commandées par les N signaux d'horloge élémentaires, et délivrant respectivement N signaux de sortie, et **par le fait que** ladite unité de logique combinatoire est apte à recevoir les N signaux de sortie.

**31.** Dispositif selon la revendication 30, **caractérisé par le fait que** les moyens de conversion (MCV) présentent une structure différentielle en aval des bascules, et **par le fait que** les moyens de filtrage présentent également une structure différentielle.

**32.** Dispositif selon l'une des revendications 19 à 31, **caractérisé par le fait que** le sous-groupe de bits comporte plusieurs bits, le premier bit du sous-groupe définissant la position de l'impulsion de base à l'intérieur de ladite fenêtre, et l'ensemble des bits du sous-groupe définissant la forme de l'impulsion de base.

33. Dispositif selon l'une des revendications 19 à 32, **caractérisé par le fait qu'**au moins deux groupes comportent au moins un sous-groupe de bits définissant respectivement au moins deux informations numériques de position et de forme d'au moins deux impulsions situées à l'intérieur de ladite fenêtre.

34. Dispositif selon l'une des revendications 19 à 33, **caractérisé par le fait qu'**au moins un groupe comporte plusieurs sous-groupes de bits définissant respectivement plusieurs informations numériques de position et de forme de plusieurs impulsions situées à l'intérieur de ladite fenêtre.

35. Dispositif selon l'une des revendications 19 à 34, **caractérisé par le fait que** ladite précision temporelle de positionnement est égale à ou meilleure que 100 picosecondes.

36. Dispositif selon la revendication 35, **caractérisé par le fait que** N est une puissance de deux, et **par le fait que** la fréquence de délivrance est de l'ordre de quelques centaines de MHz et la précision temporelle égale à ou meilleure que 50 picosecondes environ.

37. Dispositif selon l'une des revendications 19 à 36, **caractérisé par le fait que** les moyens de conversion sont réalisés en technologie CMOS.

38. Terminal d'un système de transmission sans fil, **caractérisé par le fait qu'**il incorpore un dispositif selon l'une des revendications 19 à 37.

# FIG.1

EP 1 455 498 A1

FIG. 2

EP 1 455 498 A1

# FIG.3

EP 1 455 498 A1

# FIG.4

EP 1 455 498 A1

# FIG.5

FIG.6

EP 1 455 498 A1

1 / PRF

Δt

IMPB

Te  Te

FIG.7

Energie

FLT

FD

1/4Δt  1/2Δt  Fréquences

FIG.8

amplitude

## FIG.9

énergie(dB)

## FIG.10

fréquences (GHz)

amplitude

## FIG.11

temps (ns)

énergie (dB)

## FIG.12

fréquences (GHz)

FIG.13

FIG.14

FIG.15

FIG.16

# FIG.17

FIG.18

FIG.19

FIG.20

# EP 1 455 498 A1

**Office européen des brevets**

## RAPPORT DE RECHERCHE EUROPEENNE

Numéro de la demande

EP 03 29 0537

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | WO 01 22672 A (UT BATTELLE) 29 mars 2001 (2001-03-29) * page 10 * * page 4, ligne 27 - page 5, ligne 2 * --- | 1,19,38 | H04L25/49 H04B1/69 |
| X | EP 1 280 308 A (SONY) 29 janvier 2003 (2003-01-29) * alinéa [0006] * * figure 1 * --- | 1,19,38 | |
| A | KELLY D ET AL.: "PulsON second generation timing chip: enabling UWB through precise timing" IEEE CONFERENCE ON ULTRA WIDEBAND SYSTEMS AND TECHNOLOGIES, 21 - 23 mai 2002, pages 117-121, XP002248937 Piscataway, US * figure 3 * --- | 1,19,38 | |
| A | HAN, NGUYEN: "A new ultra-wideband, ultra-short monocycle pulse generator with reduced ringing" IEEE MICROWAVE AND WIRELESS COMPONENTS LETTERS, vol. 12, no. 6, juin 2002 (2002-06), pages 206-208, XP001123622 Piscataway, US * abrégé * --- | 1,19,38 | **DOMAINES TECHNIQUES RECHERCHES (Int.Cl.7)** H04L H04B |
| A | YUE YANSHENG, LONG TENG: "An ultra-wide band orthogonal digital signal generator" INTERNATIONAL CONFERENCE ON SIGNAL PROCESSING PROCEEDINGS, 21 - 25 août 2000, pages 2086-2090 vol.3, XP002248938 Piscataway, US * abrégé * --- -/-- | 1,19,38 | |

Le présent rapport a été établi pour toutes les revendications

| Lieu de la recherche | Date d'achèvement de la recherche | Examinateur |
|---|---|---|
| LA HAYE | 24 juillet 2003 | Scriven, P |

# EP 1 455 498 A1

**Office européen des brevets**

## RAPPORT DE RECHERCHE EUROPEENNE

Numéro de la demande

EP 03 29 0537

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | AGEE ET AL.: "Ultra-wideband transmitter research" IEEE INTERNATIONAL WORKSHOP ON HIGH POWER MICROWAVE GENERATION AND PULSE SHORTENING, vol. 26, no. 3, 10 - 12 juin 1997, pages 860-873, XP002248939 New York, US ISSN: 0093-3813 * abrégé * | 1,19,38 | |
| A | ZHIQIANG WU ET AL.: "Ultra wideband DS-CDMA via innovations in chip shaping" IEEE VEHICULAR TECHNOLOGY CONFERENCE, 7 - 11 octobre 2001, pages 2470-2474 vol.4, XP002248940 Piscataway, US * abrégé * | 1,19,38 | |

DOMAINES TECHNIQUES RECHERCHES (Int.Cl.7)

Le présent rapport a été établi pour toutes les revendications

| Lieu de la recherche | Date d'achèvement de la recherche | Examinateur |
|---|---|---|
| LA HAYE | 24 juillet 2003 | Scriven, P |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 03 29 0537

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-07-2003

| Document brevet cité au rapport de recherche | | Date de publication | Membre(s) de la famille de brevet(s) | | Date de publication |
|---|---|---|---|---|---|
| WO 0122672 | A | 29-03-2001 | AU | 7127700 A | 24-04-2001 |
| | | | CA | 2385417 A1 | 29-03-2001 |
| | | | EP | 1228613 A1 | 07-08-2002 |
| | | | WO | 0122672 A1 | 29-03-2001 |
| | | | US | 2002097790 A1 | 25-07-2002 |
| | | | US | 2002146080 A1 | 10-10-2002 |
| | | | US | 2002080889 A1 | 27-06-2002 |
| EP 1280308 | A | 29-01-2003 | JP | 2003037638 A | 07-02-2003 |
| | | | EP | 1280308 A2 | 29-01-2003 |
| | | | US | 2003128772 A1 | 10-07-2003 |

EPO FORM P0460

Pour tout renseignement concernant cette annexe : voir Journal Officiel de l'Office européen des brevets, No.12/82